# EUROPÄISCHE PATENTANMELDUNG

(11) **EP 1 201 723 A1**
(43) Veröffentlichungstag der Anmeldung: **02.05.2002**
(21) Anmeldenummer: 00123129.9
(22) Anmeldetag: 25.10.2000
(51) Int. Cl.: C09J 7/02, C09J 7/00

(54) **Klebstoffolie und Verfahren zu deren Herstellung**

(71) Anmelder: ATP Alltape Klebetechnik GmbH, 99826 Mihla (DE)
(72) Erfinder: Müller, Jan Dr. rer. nat., 99817 Eisenach (DE); Mertinkat, Jörg Dr. rer. nat., 21255 Wistedt (DE); van Steenbergen, Casper J., 42477 Radevormwald (DE)
(74) Vertreter: Stenger, Watzke & Ring Patentanwälte

(57) **Zusammenfassung**

Um eine Klebstoffolie, insbesondere zum Verkleben von Bauteilen bzw. Bauteil-Komponenten in der Automobilindustrie oder zum Abdichten bzw. Abecken von Dehnungsfugen, Spalten und dergleichen im Baubereich bereitzustellen, welche ohne den Einsatz sogenannter Primer zur Oberflächenvorbehandlung eine dauerhafte Verklebung auch zwischen Materialien mit hohem Weichmachergehalt gewährleistet, bei der Anwendung und der Verarbeitung im Rahmen einer manuellen oder maschinellen Fertigung bzw. Verklebung in Produktionsprozessen einfach handhabbar ist und darüber hinaus vibrationsunempfindlich ist und gute Lösemittel-, Wasser-, Luftfeuchtigkeits- und Temperaturbeständigkeit aufweist, wird mit der Erfindung eine Klebstoffolie, insbesondere zum Verkleben von Bauteilen bzw. Bauteil-Komponenten in der Automobilindustrie, mit wenigstens einer nicht- oder schwachklebenden energieelastisch verformbaren Schicht und wenigstens einer klebenden Schicht, wobei die Schichten abwechselnd aufeinander angeordnet sind, vorgeschlagen.

## Beschreibung

Die vorliegende Erfindung betrifft eine Klebstoffolie, insbesondere zum Verkleben von Bauteilen bzw. Bauteil-Komponenten in der Automobilindustrie oder zum Abdichten bzw. Abdecken von Dehnungsfugen, Spalten und dergleichen im Baubereich, und ein Verfahren zu deren Herstellung.

In der Automobilindustrie müssen eine Vielzahl von Bauteilen für Kraftfahrzeuge miteinander und mit den Kraftfahrzeugen verklebt werden. Dabei müssen verschiedenste Materialien miteinander verklebt werden, insbesondere metallische Bauteil-Komponenten mit Bauteil-Komponenten aus Kunststoff, beispielsweise PVC-Formteilen.

Die an die Verbindungen zwischen den Bauteilen und den Kraftfahrzeugen sowie den Bauteil-Komponenten untereinander gestellten Anforderungen erfüllen die bisher bekannten Klebstoffsysteme und insbesondere Klebstoffolien bzw. -bänder nur unzureichend. So ist insbesondere beim Verkleben von PVC-Formteilen mit üblicherweise hohem Weichmachergehalt die Verwendung von Primern zur Oberflächenvorbehandlung erforderlich. Bei solchen Klebstoffsystemen handelt es sich um geschäumte Kleber oder um Systeme von auf dünnen Schaumschichten aufgebrachten Klebern. Das Aufbringen eines Primers auf die zu verklebenden Oberflächen bringt dabei einen erhöhten Zeit- und Kostenaufwand bei der Fertigung bzw. der Verklebung von Bauteilen mit sich, insbesondere beim Verkleben von weichmacherhaltigen Bauteilen. Weichmacher migrieren an die Oberflächen der zu verklebenden Bauteile bzw. Bauteil-Komponenten und erschweren damit die Verankerung des Klebers. Ferner migrieren die Weichmacher in die Kleber und reduzieren dessen Klebkräfte und Scherfestigkeit. Zur Vermeidung der Migrationserscheinungen ist aus der DE 197 16 996 C1 bzw. der DE 197 57 426 A1 die Verwendung zusätzlicher Zwischenschichten bekannt.

Bei der Anwendung bzw. Verklebung von Bauteilen bzw. Bauteil-Komponenten, insbesondere in der Automobilindustrie, treten Spannungsspitzen auf, die größer sind als die mittlere auf die Verklebungsfläche wirkende Kraft. Dadurch wird die Verklebung brüchig und unbrauchbar.

Ferner sind die bisher bekannten Klebstoffe bzw. Klebstoffsysteme hinsichtlich ihrer Positionierung und Handhabung im Rahmen der manuellen oder maschinellen Fertigung bzw. Verklebung von Bauteilen bzw. Bauteil-Komponenten in der Automobilindustrie überaus aufwendig, insbesondere da deren Klebkräfte, Schichtdicken, elastischen und thermischen Eigenschaften nur beschränkt einstellbar und an die jeweils zu verklebenden Bauteile bzw. Bauteil-Komponenten anpaßbar sind.

Der Erfindung liegt in Anbetracht dieses Standes der Technik die **Aufgabe** zugrunde, eine Klebstoffolie, insbesondere zum Verkleben von Bauteilen bzw. Bauteil-Komponenten in der Automobilindustrie oder zum Abdichten bzw. Abdecken von Dehnungsfugen, Spalten und dergleichen im Baubereich bereitzustellen, welche ohne den Einsatz sogenannter Primer zur Oberflächenvorbehandlung eine dauerhafte Verklebung auch zwischen Materialien mit hohem Weichmachergehalt gewährleistet, bei der Anwendung und der Verarbeitung im Rahmen einer manuellen oder maschinellen Fertigung bzw. Verklebung in Produktionsprozessen einfach handhabbar ist und darüber hinaus vibrationsunempfindlich ist und gute Lösemittel-, Wasser-, Luftfeuchtigkeits- und Temperaturbeständigkeit aufweist.

Die Aufgabe wird erfindungsgemäß **gelöst**, durch eine Klebstoffolie, insbesondere zum Verkleben von Bauteilen bzw. Bauteil-Komponenten in der Automobilindustrie oder zum Abdichten bzw. Abdecken von Dehnungsfugen, Spalten und dergleichen im Baubereich, mit wenigstens einer nicht- oder schwachklebenden energieelastisch verformbaren Schicht und wenigstens einer klebenden Schicht, wobei die Schichten abwechselnd aufeinander angeordnet sind.

Aufgrund der Verwendung der nicht- oder schwachklebenden energieelastisch verformbaren Schicht, in der zumindest zweischichtigen Klebstoffolie, können bei der Anwendung bzw. Verklebung Spannungsspitzen, die größer sind als die mittlere auf die Verklebungsfläche wirkende Kraft, von der Klebstoffolie aufgenommen und über das Verbundsystem, bestehend aus Kraftfahrzeug und Bauteil bzw. den Bauteil-Komponenten eines Bauteils, verteilt werden und so einem Bruch der Verklebung entgegenwirken. Vorteilhafterweise ist die energieelastisch verformbare nicht- oder schwachklebende Schicht gummielastisch.

Die Klebstoffolie ist ebenso als elastisches Kleb-, Abdeckungs- und/oder Dichtungsmaterial im Baubereich einsetzbar, insbesondere bei Anwendungen, bei denen es auf die Elastizität auf des zu verarbeitenden Materials ankommt. Solche Anwendungen sind z. B. das Abdichten oder das Abdecken von Dehnungsfugen oder Spalten zwischen unterschiedlichen Materialien. Ein einseitiges Klebeband, beispielsweise als dehnbare Folie zukaschiert und gestanzt, dient als an unterschiedliche Füge- und Bauteilformen anpaßbares Abdeck- und Dichtungsband.

In einer weiteren Ausgestaltung der Erfindung basiert die nicht- oder nur schwachklebende gummielastische Schicht auf einer Rezeptur aus wenigstens einem aromatischen oder aliphatischen Polyurethan mit Anteilen von 20 bis 100 Gew.-% und wenigstens einem Polyacrylat mit Anteilen von 0 bis 80 Gew.-%. Die klebende Schicht basiert vorteilhafterweise auf einer Rezeptur aus wenigstes einem Polyacrylat mit Anteilen von 50 bis 100 Gew.-% und wenigstens einem Harz mit Anteilen von 0 bis 50 Gew.-%. Ausgehend von diesen Rezepturen können in Kombination mit den Schichtdicken der einzelnen Schichten sowohl die Klebkräfte als auch die elastischen Eigenschaften der Klebstoffolie in weiten Bereichen den verschiedenen Erfordernissen hinsichtlich einer dauerhaften Verklebung angepaßt werden.

Die erfindungsgemäße Klebstoffolie zeigt eine ausgezeichnete Lösemittel-, Wasser-, Luftfeuchtigkeits- und Temperaturbeständigkeit auf und ist gegen Vibrationen bei der Anwendung unempfindlich und darüber hinaus überaus einfach verarbeit- und handhabbar, insbesondere in Produktionsprozessen in der Automobilindustrie zum Verkleben von Bauteilen bzw. Bauteil-Komponenten von Kraftfahrzeugen, beispielsweise Zierleisten-Komponenten untereinander bzw. so gefertigte Zierleisten am Kraftfahrzeug.

Für die Positionierung und Handhabung einer Klebstoffolie im Rahmen einer manuellen bzw. maschinellen Fertigung bzw. Verklebung von Bauteilen bzw. Bauteil-Komponenten in der Automobilindustrie, beispielsweise zum Verkleben von Zierleisten oder dergleichen, sind die elastischen Eigenschaften der Klebstoffolie von großer Bedeutung. Mit der vorliegenden Erfindung lassen sich diese insbesondere durch die Wahl und den Anteil des Polyurethans sehr gut einstellen. Darüber hinaus zeigen die verwendeten Rohstoffe der Rezepturen eine ausgezeichnete Lösemittel- und Weichmacherbeständigkeit auf, auch bei sehr hohen Temperaturen, so daß eine dauerhafte Verklebung auch ohne die Anwendung eines Primers zur Oberflächenvorbehandlung ermöglicht ist. Darüber hinaus werden durch die entbehrliche Verwendung eines Primers zur Oberflächenvorbehandlung die Produktionsprozesse erheblich vereinfacht und von den Primern ausgehenden Gefahren für die Gesundheit beseitigt.

In einer vorteilhaften Ausgestaltung der Erfindung sind die Polyacrylate mittels Emulsionspolymerisation hergestellte Elastomere, vorzugsweise Primal E-3534 der Firma Rohm & Haas und/oder Plextol E 299 der Firma Polymer Latex. Vorteilhafterweise ist das Polyurethan aromatisches oder aliphatisches Polyurethan, vorzugsweise UL 7612 VP und/oder UL 7613 VP der Firma Alberdingk Boley. Die erfindungsgemäße Verwendung der Harze in den klebenden Schichtungen führt zu einer Erhöhung der Anfangshaftung, welche durch die erfindungsgemäße Auswahl über weite Breiche variierbar ist.

In einer weiteren vorteilhaften Ausgestaltung der Erfindung weisen die einzelnen Schichten eine Dicke von 10 µm bis 300 µm auf. Vorteilhafterweise weist die erfindungsgemäße Klebstoffolie eine Dicke von 50 µm bis 1000 µm auf.

In einer weiteren vorteilhaften Ausgestaltung der Erfindung sind die Rezepturen auf einem Trägermaterial aufgebracht, vorzugsweise auf silikonisiertem Papier. Durch die Verwendung des Trägermaterials ist die Klebstoffolie vorteilhafterweise an verschiedenste Formen der zu verklebenden Bauteile bzw. Bauteil-Komponenten anpaßbar, was neben einer manuellen Verarbeitung eine maschinelle Verarbeitung zuläßt. Durch die Verwendung des Trägermaterials ist die Klebstoffolie vorteilhafterweise stanzbar, was eine maschinelle Verarbeitung mit hohen Verarbeitungsgeschwindigkeiten für große Stückzahlen besonders vorteilhaft ist. Vorteilhafterweise ist die Klebstoffolie als Klebeband ausgebildet. Für die Klebstoffolie ist hier die Verwendung von silikonisierten Folien von Vorteil, da diese aufgrund ihrer Dehnfähigkeit und Reißfestigkeit eine Anpassung an verschiedene Fügeformen und auch maschinelle Verarbeitungsprozesse ermöglichen. Silikonisiertes Papier sollte hauptsächlich als Hilfsträger bei der Produktion und Laminierung der Einzelschichten der Klebstoffolie Verwendung finden, da silikonisiertes Papier bei maschinellen Verarbeitungsprozessen leichter beschädigt werden kann.

Vorteihafterweise umfaßt wenigstens eine der Rezepturen der Schichten wenigstens einen Füllstoff mit Anteilen von 0 bis 40 Gew.-%. Füllstoffe dienen dabei beispielsweise der Färbung der Klebstoffolie. Als Vernetzer bzw. reaktive Komponenten mit Anteilen von 0 bis 40 Gew.-% kommen vorteilhafterweise alle Verbindungen in Betracht, die mit den in den Rohstoffen der Klebstoffolie oder in den zu verklebenden Bauteilen enthaltenen funktionellen Gruppen der Moleküle reagieren können. Die so initiierten Reaktionen bringen eine höhere Kohäsion der einzelnen Schichten der Klebstoffolie und damit eine größere innere Festigkeit mit sich. Darüber hinaus läßt sich so auch im niederen Klebkraftbereich eine geringere Anfangshaftung einstellen.

Ein besonderer Vorteil der Rezeptur der nicht- oder nur schwachklebenden Schichten der erfindungsgemäßen Klebstoffolie ist die Hitzeaktivierbarkeit der Klebstoffschicht. Das bedeutet, daß die Klebstoffolie durch die klebenden Schichten zunächst beispielsweise auf einem Fügeteil vorfixiert werden kann um nach dem Zusammenbringen zweier Fügeteile durch Einwirkung von Hitze einen festen Verbund zu erzielen. Hierbei ist die Berücksichtigung von auf die Klebstoffolie und auf die Fügeteile speziell zugeschnittenen Vernetzern bzw. reaktiven Komponenten für eine durch Hitze injizierte Reaktion nach dem Zusammenbringen der Fügeteile von Vorteil.

Verfahrensseitig wird mit der Erfindung ein Verfahren zur Herstellung einer erfindungsgemäßen Klebstoffolie angegeben, wobei eine nicht- oder schwachklebende energieelastisch verformbare Schicht und eine klebende Schicht jeweils auf einem Trägermaterial aufgetragen, getrocknet und die Schichten übereinander laminiert werden.

In einer weiteren vorteilhaften Ausgestaltung der Erfindung werden die jeweils auf einem Trägermaterial ausgebildeten Schichten einander zukaschiert, wobei vorteilhafterweise die als Hilfsträger dienenden Trägermaterialien entfernt werden.

Verfahrensgemäß werden gemäß einer weiteren Ausgestaltung der Erfindung zum Ausbilden der nicht- oder schwachklebenden Schicht wenigstens ein aromatisches oder aliphatisches Polyurethan mit einem Anteil von 20 bis 100 Gew.-% und wenigstens ein Polyacrylat mit Anteilen von 0 bis 80 Gew.-% miteinander vermengt. Zum Ausbilden der klebenden Schicht werden wenigstens ein Polyacrylat mit Anteilen von 50 bis 100 Gew.-% und wenigstens ein Harz mit Anteilen von 0 bis 50 Gew.-% miteinander vermengt. Vorteilhafterweise werden dabei das Polyurethan und das Polyacrylat in Form einer wäßrigen Dispersion unter Rühren miteinander vermengt bzw. das Polyacrylat mit dem Harz und/oder dem Vernetzer versetzt. Diese in wäßriger Dispersion vorliegende Mischung wird dann jeweils mittels einer geeigneten, dem Fachmann geläufigen, Beschichtungsvorrichtung auf dem betreffenden Trägermaterial aufgetragen und getrocknet. Die einzelnen Schichten werden daraufhin übereinander laminiert. Auf diese Weise lassen sich Klebebänder mit einer Gesamtdicke von 50 bis 1000 µm herstellen, deren elastische Eigenschaften und Klebeigenschaften in weiten Bereichen variierbar sind.

## Patentansprüche

1. Klebstoffolie, insbesondere zum Verkleben von Bauteilen bzw. Bauteil-Komponenten in der Automobilindustrie oder zum Abdichten bzw. Abdecken von Dehnungsfugen, Spalten und dergleichen im Baubereich, mit wenigstens einer nicht- oder schwachklebenden energieelastisch verformbaren Schicht und wenigstens einer klebenden Schicht, wobei die Schichten abwechselnd aufeinander angeordnet sind.

2. Klebstoffolie nach Anspruch 1, **dadurch gekennzeichnet, daß** die energieelastisch verformbare Schicht gummielastisch ist.

3. Klebstoffolie nach Anspruch 1 oder Anspruch 2, **dadurch gekennzeichnet, daß** die nicht- oder schwachklebende energieelastisch verformbare Schicht auf einer Rezeptur aus wenigstens einem aromatischen oder aliphatischen Polyurethan mit Anteilen von 20 bis 100 Gew.-% und wenigstens einem Polyacrylat mit Anteilen von 0 bis 80 Gew.-% basiert.

4. Klebstoffolie nach einem der Ansprüche 1 bis 3, **dadurch gekennzeichnet, daß** die klebende Schicht auf einer Rezeptur aus wenigstens einem Polyacrylat mit Anteilen von 50 bis 100 Gew.-% und wenigstens einem Harz mit Anteilen von 0 bis 50 Gew.-% basiert.

5. Klebstoffolie nach Anspruch 3 oder Anspruch 4, **dadurch gekennzeichnet, daß** die Polyacrylate mittels Emulsionspolymerisation hergestellte Elastomere sind, vorzugsweise Primal E-3534 der Firma Rohm & Haas und/oder Plextol E 299 der Firma Polymer Latex.

6. Klebstoffolie nach einem der Ansprüche 3 bis 5, **dadurch gekennzeichnet, daß** das Polyurethan aromatisches oder aliphatisches Polyurethan ist, vorzugsweise UL 7612 VP oder UL 7613 VP der Firma Alberdingk Boley.

7. Klebstoffolie nach einem der Ansprüche 1 bis 6, **dadurch gekennzeichnet, daß** die einzelnen Schichten eine Dicke von 10 µm bis 300 µm aufweisen.

8. Klebstoffolie nach einem der Ansprüche 1 bis 7, **dadurch gekennzeichnet, daß** diese eine Dicke von 50 µm bis 1000 µm aufweist.

9. Klebstoffolie nach einem der Ansprüche 1 bis 8, **dadurch gekennzeichnet, daß** die Schichten auf einem Trägermaterial ausgebildet sind, vorzugsweise auf silikonisiertem Papier, besonders bevorzugt auf silikonisierter Folie.

10. Klebstoffolie nach einem der vorhergehenden Ansprüche, **dadurch gekennzeichnet, daß** diese stanzbar ist.

11. Klebstoffolie nach einem der vorhergehenden Ansprüche, **dadurch gekennzeichnet, daß** diese als Klebeband ausgebildet ist.

12. Klebstoffolie nach einem der Ansprüche 3 bis 11, **dadurch gekennzeichnet, daß** wenigstens eine der Rezepturen der Schichten wenigstens einen Füllstoff mit Anteilen von 0 bis 40 Gew.-% umfasst.

13. Klebstoffolie nach einem der vorhergehenden Ansprüche, **dadurch gekennzeichnet, daß** diese hitzeaktivierbar ist.

14. Verfahren zur Herstellung einer Folie, insbesondere zum Verkleben von Bauteilen bzw. Bauteil-Komponenten in der Automobilindustrie oder zum Abdichten bzw. Abecken von Dehnungsfugen, Spalten und dergleichen im Baubereich, wobei wenigstens eine nicht- oder schwachklebende energieelastisch verformbare Schicht und wenigstens eine klebende Schicht jeweils auf einem Trägermaterial aufgetragen, getrocknet und die Schichten abwechselnd aufeinander angeordnet werden.

15. Verfahren nach Anspruch 14, **dadurch gekennzeichnet, daß** zum Ausbilden der nicht- oder schwachklebenden energieelastisch verformbaren Schicht wenigstens ein aromatisches oder aliphatisches Polyurethan mit einem Anteil von 20 bis 100 Gew.-% und wenigstens ein Polyacrylat mit einem Anteil von 0 bis 80 Gew.-% miteinander vermengt werden.

16. Verfahren nach Anspruch 14 oder Anspruch 15, **dadurch gekennzeichnet, daß** zum Ausbilden der klebenden Schicht wenigstens ein Polyacrylat mit Anteilen von 50 bis 100 Gew.-% und wenigstens ein Harz mit Anteilen von 0 bis 50 Gew.-% miteinander vermengt werden.

17. Verfahren nach Anspruch 15 oder Anspruch 16, **dadurch gekennzeichnet, daß** das Polyurethan und das Polyacrylat in Form einer wäßrigen Dispersion unter Rühren miteinander vermengt werden.

18. Verfahren nach einem der Ansprüche 15 bis 17, **dadurch gekennzeichnet, daß** das Polyacrylat mit dem Harz und/oder einem Vernetzer versetzt wird, vorzugsweise mit Anteilen von 0 bis 40 Gew.-%.

19. Verfahren nach einem der vorhergehenden Ansprüche, **dadurch gekennzeichnet, daß** die in wäßriger Dispersionsform vorliegenden Mischungen jeweils mittels einer Beschichtungsvorrichtung auf einem Trägermaterial aufgetragen, getrocknet und die einzelnen Schichten daraufhin übereinander laminiert werden.

20. Verfahren nach einem der vorhergehenden Ansprüche, **dadurch gekennzeichnet, daß** die Trägermaterialien als Hilfsträger verwendet und zum Aufbau der Klebstoffolie entfernt werden.

21. Verfahren nach einem der vorhergehenden Ansprüche, **dadurch gekennzeichnet, daß** wenigstens einer der Rezepturen der Schichten wenigstens ein Füllstoff mit Anteilen von 0 bis 40 Gew.-% zugemengt wird.
